Europäisches Patentamt

European Patent Office

Office européen des brevets

(19)

(11) Veröffentlichungsnummer: **0 033 102**
**B1**

(12) **EUROPÄISCHE PATENTSCHRIFT**

(45) Veröffentlichungstag der Patentschrift:
**19.10.83**

(51) Int. Cl.³: **F 16 C 33/54,** B 21 D 53/12

(21) Anmeldenummer: **81100310.2**

(22) Anmeldetag: **16.01.81**

(54) Verfahren zur Herstellung eines Käfigs für Kegelrollenlager.

(30) Priorität: **25.01.80 DE 3002688**

(43) Veröffentlichungstag der Anmeldung:
**05.08.81 Patentblatt 81/31**

(45) Bekanntmachung des Hinweises auf die Patenterteilung:
**19.10.83 Patentblatt 83/42**

(84) Benannte Vertragsstaaten:
**DE FR GB IT**

(56) Entgegenhaltungen:
**DE-A-1 625 643**
**DE-A-2 416 320**
**DE-C-309 658**
**DE-C-857 456**
**DE-U-1 909 842**
**DE-U-1 927 472**
**FR-A-956 989**
**US-A-3 075 278**

(73) Patentinhaber: **Otto Bihler Maschinenfabrik GmbH & Co.
KG, Lechbrucker Strasse 15, D-8959 Halblech/Füssen
(DE)**

(72) Erfinder: **Bihler, Otto, Schleiferweg 2, D-8959 Halblech
(DE)**
Erfinder: **Augenstein, Reiner, Kapellenweg 15,
D-8959 Halblech (DE)**

(74) Vertreter: **Weickmann, Heinrich, Dipl.-Ing.,
Patentanwälte Dipl.-Ing. H. Weickmann Dipl.-Phys.Dr. K.
Fincke Dipl.-Ing. F.A. Weickmann Dipl.-Chem. B. Huber
Dr.-Ing. H. Liska Möhlstrasse 22,
D-8000 München 86 (DE)**

Verfahren zur Herstellung eines Käfigs für Kegelrollenlager

Die Erfindung betrifft ein Verfahren zur Herstellung eines Käfigs für Kegelrollenlager mit sich zwischen axial beabstandeten Abschlußringen erstreckenden Querstegen durch Ausstanzen von Fenstern aus einem geradlinigen, flachen Materialstreifen, Verformen der zwischen den Fenstern stehengebliebenen Querstege und anschließendes Rollen des Materialstreifens zu einem Ring und ggf Verbinden der Ringenden an der Schlußstelle.

Ein Verfahren dieser Art ist aus der DE-OS 2 416 320 bekannt. Bei diesem bekannten Verfahren werden die Fenster in herkömmlicher Weise so ausgestanzt, daß an den beiden Rändern des Materialstreifens Längsstege übrigbleiben, die Fenster also ringsum geschlossen sind. Die Stege werden hierauf aus der Ebene des Materialstreifens herausgebogen; anschließend wird der Materialstreifen zum Ring gerollt und an der Stoßstelle geschlossen. Die beiden Enden des so gewonnenen Käfigs haben untereinander gleichen Durchmesser entsprechend der Länge der Längsstege, d. h. entsprechend der Länge des Materialstreifens; die Querstege sind entsprechend der Geometrie des Kegelrollenlagers, für welche der jeweilige Käfig bestimmt ist, aus der durch die Endringe definierten Zylinderfläche herausgebogen.

Über eine Bewährung der so hergestellten Käfige in der Praxis ist nichts bekannt. Es dürfte in vielen Fällen nicht akzeptabel sein, daß die beiden aus den Längsstegen gebildeten Abschlußringe des Käfigs gleichen Durchmesser haben; hierdurch ist jedenfalls die Anwendbarkeit der so hergestellten Käfige für Kegelrollenlager verschiedener Geometrie stark eingeschränkt.

Der Erfindung liegt die Aufgabe zugrunde, auf einfache und materialsparende Weise Käfige für Kegelrollenlager herzustellen, welche ohne Einschränkung an Kegelrollenlager verschiedenster Geometrie angepaßt werden können.

Zur Lösung dieser Aufgabe wird erfindungsgemäß vorgeschlagen, daß man die Fenster in einem Materialstreifen durchgehend bis zu dem einen Rand ausstanzt, derart, daß nur einseitig ein Längssteg mit frei ausladenden Querstegen verbleibt, daß man die Querstege derart verformt, daß die freien Enden der Querstege gegenüber der Ebene des Längsstegs in Radialrichtung des zu bildenden Rings versetzt sind, derart, daß nach dem anschließenden Rollen die freien Enden der Querstege auf einem Kreis mit einem von dem Durchmesser des aus dem Längssteg gebildeten Kreises unterschiedlichen Durchmessers liegen und daß man die freien Enden des Quersteges mit einem gesondert hergestellten Abschlußring verbindet, insbesondere verschweißt.

Ersichtlich ist man bei dem erfindungsgemäß vorgeschlagenen Verfahren frei hinsichtlich der Wahl der Durchmesser der beiden Abschlußringe des Käfigs, da man den Durchmesser des nachträglich angebrachten Abschlußrings frei und in beliebigem Verhältnis zu dem Durchmesser des einstückig aus dem Materialstreifen herausgeformten Abschlußrings wählen kann.

Aus der DE-C-309 658 ist es bekannt, kammartige Käfige für Wälzlager, die auch nach der Fertigstellung noch kammartig sind, also nur einen Abschlußring an einem Ende aufweisen, aus einem Stück Blech durch Stanzen und Biegen herzustellen. Dabei wird aus dem Blech zunächst ein Kammstreifen ausgestanzt. Die dabei entstehenden Zungen werden zurückgeschlagen, worauf der Kammstreifen zylindrisch oder konisch gewalzt wird. Die freien Enden der Zungen liegen nach den Walzen auf einem Kreis, dessen Ebene mit der des Abschlußringes zusammenfällt. Diese spezielle Art von Käfig ist für Rollen mit abgesetztem Kopf.

Das erfindungsgemäße Verfahren unterscheidet sich auch in besonders vorteilhafter Weise von den bisher in der Praxis angewandten Verfahren.

Bisher wurden in der Praxis Kegelrollenlagerkäfige auf Pressen in mehreren Stationen tiefgezogen; d. h. es wurden konische Näpfe hergestellt; anschließend wurde der Boden dieser Näpfe freigeschnitten. Anschließend wurden die Taschen oder Fenster in den so gebildeten Ring eingeschnitten und die zwischen den Fenstern gebildeten Stege geprägt. Die Werkzeuge zur Durchführung dieses Verfahrens sind sehr störungsanfällig; die Herstellungskosten stehen in einem ungünstigen Verhältnis zum erzielbaren Preis. In den meisten Fällen wird das Ausstanzen der Taschen und das Anprägen mit Einzelwerkzeugen durchgeführt, was zwar die Herstellungskosten und die Störungsanfälligkeit der Werkzeuge herabsetzt, andererseits aber das Herstellungsverfahren der Käfige sehr unrationell macht. Nachteilig bei diesem bekannten Verfahren ist der enorme Materialverlust, welcher durch das Freischneiden des Bodens eintritt. Nachteilig ist weiterhin, daß die Materialfaserung des Blechs vom Walzen her in einer Richtung liegt und daß diese Faserrichtung sich beim Tiefziehen des Blechs zum Napf innerhalb des Napfs auf die verschiedensten Orientierungen innerhalb des Napfs einstellen. Dies bedeutet, daß an den einzelnen Stegen verschiedene Festigkeitswerte zustande kommen.

Nachteilig bei diesem bekannten, in der Praxis geübten Verfahren ist auch die Schwierigkeit bei der Bearbeitung der Stegkanten. Diese Stegkanten sind vom Stanzen her rauh, da beim Stanzen ein Teil der Materialstärke bricht. Die Bruchflächen müssen durch Prägen oder dgl. bearbeitet werden. Diese Bearbeitung durch Prägen ist an dem von der Napfbildung her bereits konischen Material besonders schwierig; sie ist wesentlich einfacher bei dem erfindungsgemäßen Verfahren, bei dem die Kantenbehandlung, gleichgültig ob durch Prägen oder durch andere Verfahren, am flachen Materialstreifen nach dem Einstanzen der Fenster bewirkt werden kann. Während bei den nach dem bekannten Verfahren hergestellten Käfigen eine ideale Rollenführung nicht möglich ist und insbesondere ein Schmierfilm kaum aufrechterhalten werden kann, lassen sich bei Anwendung des erfindungsgemäßen Verfahrens die Kanten der Stege derart behandeln, daß sie nahezu ideale Führungsflächen für die Kegelrollen bilden und die Schmierfilmbildung sehr erleichtert wird. Der Verschleiß sowohl an den Rollen als auch am Käfig ist deshalb bei den nach dem erfindungsgemäßen Verfahren hergestellten Käfigen geringer.

Den bei dem erfindungsgemäßen Verfahren mit den freien Enden der Querstege zu verbindenden Abschlußring kann man durch Biegen, beispielsweise durch Biegen aus einem flachen Material, in der Ebene dieses flachen Materials herstellen, so daß hierbei kein Materialverlust auftritt.

Um das Zentrieren des Abschlußrings an den freien Enden der Querstege zu erleichtern, kann man an dem Abschlußring und/oder an den Querstegen Anschlagmittel zur Fixierung oder freien Enden der Querstege anformen; eine Möglichkeit um radiale Anschlagmittel zu schaffen, besteht darin, daß man an dem Abschlußring eine Kröpfung anformt.

Hinsichtlich des Verlaufs der Querstege zwischen den beiden Abschlußringen besteht weitgehende Gestaltungsfreiheit. Man wird bei der Formung der Querstege insbesondere darauf achten, daß die Kegelrollen in Umfangsrichtung optimal geführt sind, d. h. zwischen zwei aufeinanderfolgenden Querstegen möglichst exakt festgelegt sind, denn es herrscht der Grundsatz: Je besser die Nadel bzw. Rolle seitlich geführt ist, um so weniger kann die Rolle seitlich auspendeln und desto weniger wird sie durch Verlagerungen zur Bremse.

Man kann beispielsweise die Querstege lediglich an oder nahe der Verbindungsstelle mit dem Längssteg derart biegen, daß sie von dieser Anschlußstelle bis zum freien Ende. — in einem die Achse des fertigen Käfigs enthaltenden Schnitt betrachtet — geradlinig verlaufen, beispielsweise — am fertigen Kegelrollenlager betrachtet — im wesentlichen auf der durch die Kegelrollenachsen definierten Konusfläche.

Es muß aber nicht sein, daß die Querstege im fertigen Käfig über ihre ganze Länge in einer einzigen Konusfläche liegen. Insbesondere dann, wenn man den Kegelrollen auch in radialer Richtung Halt geben will, etwa um die Montage zu erleichtern, kann man zu anderen Formen des Querstegverlaufs kommen; beispielsweise kann man die Querstege derart biegen, daß sie im fertigen Konuslager beidseits einer durch die Kegelrollenachsen definierten Konusfläche liegen.

Eine vielversprechende praktische Ausführungsform sieht eine derartige Biegung der Querstege vor, daß diese im fertigen Kegelrollenlager, ausgehend von der kleineren Basis des Käfigs, zunächst im wesentlichen in der durch die Kegelrollenachsen definierten Kegelfläche verlaufen, hierauf radial einwärts springen, hierauf im wesentlichen parallel zu einer radial innerhalb der durch die Kegelrollenachsen definierten Konusfläche liegenden Kegelrollenmantellinie verlaufen, hierauf radial nach außen springen und hierauf parallel zu einer radial außerhalb der durch die Kegelrollenachsen definierten Konusfläche liegenden Kegelrollenmantellinie verlaufen.

Grundsätzlich ist es möglich, die Stege am fertigen Käfig in radialer Richtung betrachtet mit geradlinigen Kanten auszuführen, obwohl man dabei in der Regel nur zu recht armseligen Führungsverhältnissen kommen wird. Es besteht aber darüber hinaus die Möglichkeit, daß man die Kanten der Querstege vorzugsweise schon beim Ausstanzen der Fenster derart beschneidet, daß sie unter Berücksichtigung der Geometrie des fertigen Lagers die Kegelrollen in Umfangsrichtung des Käfigs und ggf. in Radialrichtung des Käfigs in gewünschter Weise führen. Auf diese Weise lassen sich Linien und Punktanlagen zwischen den Rollen und den Kanten der Stege in jeweils gewünschter Weise gewinnen.

Im Hinblick auf möglichst geringen Verschleiß ist es erwünscht, daß die Kegelrollen (oder sonstigen Rollen) nicht an scharfen Kanten, sondern möglichst an Kantflächen der Stege anliegen, und zwar möglichst tangential. Es wird deshalb in Weiterbildung der Erfindung vorgeschlagen, daß man die Kanten der Querstege ggf. unter Ausnutzung der beim Stanzen entstehenden Bruchflächen nach dem Stanzen einer Prägung unterwirft, derart, daß die Kantflächen möglichst tangential an den Kegelrollen anliegen. Die Möglichkeit, die Kanten der Stege noch am ebenen Materialstreifen zu behandeln, beispielsweise zu prägen, ist dabei ein besonderer Vorteil gegenüber dem bekannten Verfahren, bei dem die Fenster erst am fertigen konischen Napf gebildet werden und deshalb die Stege auch erst am fertigen konischen Napf behandelt werden können. Dabei ist insbesondere noch folgendes zu beachten: Beim Ausstanzen von Fenstern aus konischen Näpfen wird in aller Regel von radial innen nach radial außen gestanzt werden. Dieses Stanzen von radial innen nach radial außen führt zu Bruchflächen, welche nur sehr schwer durch Prägen bearbeitet werden können und die auch für die Führung der Rollen im Sinne einer tangentialen Anlage der Kantflächen an dem Rollenumfang wenig geeignet sind. Bei dem erfindungsgemäßen Verfahren hingegen hat man weitgehende Freiheit sowohl hinsichtlich der Stanzrichtung als auch hinsichtlich der Prägung, da Prägen und Stanzen am flachen Material durchgeführt werden können.

Es ist grundsätzlich möglich, daß man beim Stanzen den einen oder den anderen Längssteg stehenläßt; aus biegetechnischen Gründen ist es allerdings bevorzugt, daß man beim Stanzen denjenigen Längssteg stehenläßt, welcher am fertigen Käfig die größere Basis bildet.

Das Stanzen der Fenster, das Prägen der Kantflächen, das Biegen der Querstege, das Rollen des Materialstreifens, das Verbinden der zusammenstoßenden Enden des Materialstreifens und das Anbringen des Abschlußrings an den freien Enden der Stege kann auf bekannten Draht- und Bandstanz- und -biegemaschinen durchgeführt werden.

Um eine hohe Fertigungsgenauigkeit zu erzielen, kann man vor dem Anschweißen des Abschlußrings die Stege des bereits gerollten Materialstreifens zentrieren; dieses Zentrieren kann mit einer Nachverformung einhergehen, durch welche auch etwaige Abnutzungen der Stanz- und Prägewerkzeuge kompensiert werden können. Die Zentrierung und ggf. Nachverformung wird vorzugsweise mittels einer Vorrichtung durchgeführt, die aus einem konvexkonischen Innenwerkzeug mit in Flucht zu den Fenstern liegenden Ausnehmungen und aus einem konkavkonischen Außenwerkzeug mit Flucht zu den Fenstern liegenden Schiebern besteht, wobei die Schieber durch die Fenster in die Ausnehmungen einführbar sind.

Die beiliegenden Figuren erläutern die Erfindung anhand von Ausführungsbeispielen. Es stellen dar:

Fig. 1 einen geradlinigen flachen Materialstreifen, aus dem bereits Fenster unter Bestehenlassen eines Längsstegs und einer Anzahl von Querstegen ausgestanzt worden sind, wobei einer der Querstege eine Biegung erfahren hat,

Fig. 2 einen Schnitt nach Linie II-II der Fig. 1 beim Zurichten der Kanten eines Querstegs durch Prägen,

Fig. 3 einen Schnitt durch einen fertigen Käfig mit einer eingesetzten Kegelrolle,

Fig. 4 einen Schnitt nach Linie IV-IV der Fig. 3 in verkleinertem Maßstab,

Fig. 5 einen Materialstreifen mit einem andersartig gebogenen Quersteg,

Fig. 6 einen Schnitt durch einen aus dem Streifenmaterial gemäß Fig. 5 gebildeten Käfig mit eingesetzter Kegelrolle,

Fig. 7 die Zentrierung des Käfigs vor dem Anschweißen des Abschlußrings.

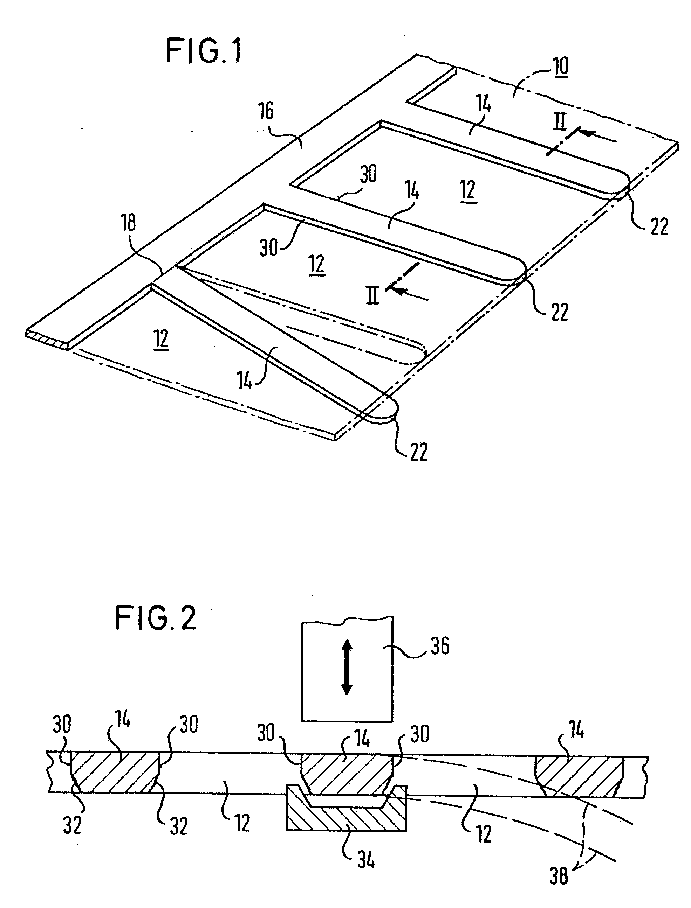

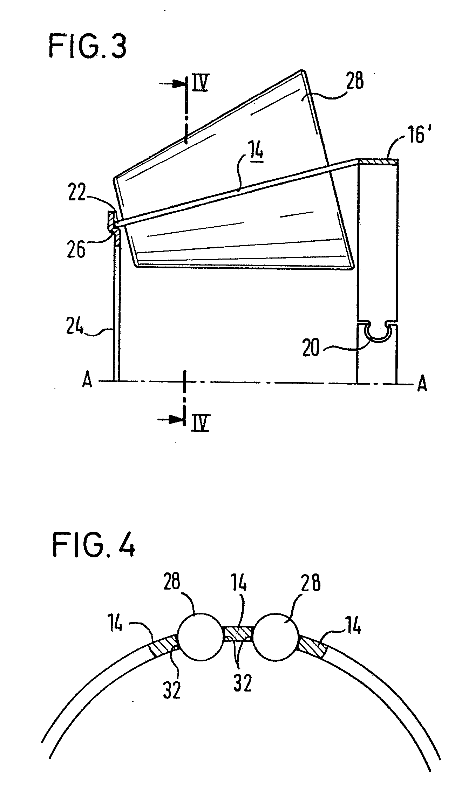

In Fig. 1 ist ein Stahlblechstreifen mit 10 bezeichnet. Aus diesem Stahlblechstreifen 10 sind Fenster 12 bereits ausgestanzt, so daß Querstege 14 und ein Längssteg 16 stehengeblieben sind. Der in Fig. 1 am weitesten links gelegene Quersteg 14 ist um seine Basis 18 nach unten gebogen. Bei der Verarbeitung zum Käfig sind sämtliche Querstege 14 so wie der in der Figur links gelegene gegenüber dem Längssteg 16 abgebogen. Der Längssteg 16 wird zu einem Ring gerollt, welcher den einen Abschlußring des Käfigs bildet. Dieser Abschlußring ist in Fig. 3 mit 16' bezeichnet. Wenn der Längssteg 16 zum Ring 16' gerollt wird, so bilden die Querstege 14 einen Konus um die Achse A-A der Fig. 3. Die zusammenstoßenden Enden des Längsstegs 16 innerhalb des Rings 16' werden miteinander verschweißt oder formschlüssig miteinander verbunden, wie bei 20 in Fig. 3 angedeutet, oder formschlüssig verbunden und verschweißt. Im Falle weniger hochwertiger Käfige genügt es, u. U. die Enden des Längsstegs 16 einfach aneinander anliegen zu lassen. An den freien Enden 22 der Querstege 14 wird, wie aus Fig. 3 ersichtlich, ein weiterer Abschlußring 24 festgeschweißt. Die freien Enden 22 der Querstege 14 sind zunächst spitz oder gerundet, so daß beim Schweißen, das in aller Regel durch Stromübergang besorgt wird, ein geringer Stromübergangswiderstand zunächst besteht, der zu einer starken Erhitzung der Teile am Übergangsort und damit zur Verschweißung führt. Der Abschlußring 24 ist bei 26 gekröpft, so daß die freien Enden der Querstege 14 wenigstens in radialer Richtung durch den Abschlußring 24 festgelegt werden. Es ist aber auch denkbar, in den Abschlußring 24 Ausnehmungen für die freien Enden 22 der Querstege 14 einzuprägen, so daß die Querstege 14 auch in Umfangsrichtung fixiert werden.

Das Ausstanzen der Fenster 12 und das Biegen der Querstege 14 um die Basen 18 kann in einer Draht- und Bandbiege- und -stanzmaschine in einem Arbeitsgang erfolgen. In dieser Maschine kann auch das Einrollen des Längsstegs 16 geschehen, beispielsweise dadurch, daß der Längssteg durch Andrückwerkzeuge fortschreitend um einen Dorn herumgedrückt wird, dessen Außendurchmesser dem Innendurchmesser des entstehenden Rings entspricht. Auf der gleichen Maschine kann anschließend auch das Anschweißen des Abschlußrings 24 stattfinden.

In Fig. 3 ist eine Kegelrolle 28 eingezeichnet, um die Relativlage der Stege 14 gegenüber den Kegelrollen anzudeuten. In Fig. 3 ist eine solche Geometrie des Käfigs und der durch die Lagerringe gehaltenen Kegelrollen ausgegangen, daß die Stege annähernd in derjenigen Kegelfläche liegen, welche durch die Kegelrollenachsen definiert ist. Es wird weiter davon ausgegangen, daß — wie in Fig. 3 nicht dargestellt — die Querstege 14 in Linienberührung an der Kegelrolle 28 anliegen. In Fig. 1 sind die Querstege so gezeichnet, als ob sie zueinander parallele Kanten 30 hätten. Durch das Abbiegen der Querstege 14 um ihre Basen 18 und das nachfolgende Einrollen des Längsstegs 16 zum Abschlußring 16' verringern sich die Abstände aufeinanderfolgender Querstege 14 voneinander, so daß dadurch eine Annäherung an die Fensterform zustande kommt, welche im Hinblick auf die konische Gestalt der Kegelrollen 28 benötigt wird. Es ist aber selbstverständlich möglich, wenn allein durch das Biegen und Rollen die richtige Fensterform nicht zustande kommt, die Kanten 30 der Querstege 14 von vornherein so zu beschneiden, am besten schon beim Ausstanzen der Fenster 12, daß nach dem Biegen und Rollen diejenige Fensterform zustande kommt, welche eine Linienberührung der Kegelrollen 28 mit den Kanten 30 ergibt.

In der Schnittdarstellung gemäß Fig. 2 erkennt man an den Querstegen 14 die Bruchflächen 32 der Kanten 30, die sich beim Ausstanzen der Fenster 12 dann ergeben, wenn in Fig. 2 das Material der Fenster 12 von oben nach unten ausgestanzt wird. Diese Bruchflächen können, wie in Fig. 2 dargestellt, am flachen Streifenmaterial glatt geprägt werden mit Hilfe einer Matrize 34 und einer Patrize 36. In Fig. 2 ist mit gestrichelt eingezogenen Kreisen 38 die spätere Biegerichtung eingezeichnet. In Fig. 4 erkennt man die geprägte Bruchfläche 32, und man erkennt insbesondere, daß sich diese Bruchflächen 32, deren Konvergenzwinkel bei der Biegung zum Ring noch verändert wird, durchaus an den Umfang der Kegelrollen 28 tangential anpassen können, so daß gerade ideale Führungsverhältnisse geschaffen sind, die auch für die Bildung und Aufrechterhaltung eines zusammenhängenden Schmierfilms günstig sind.

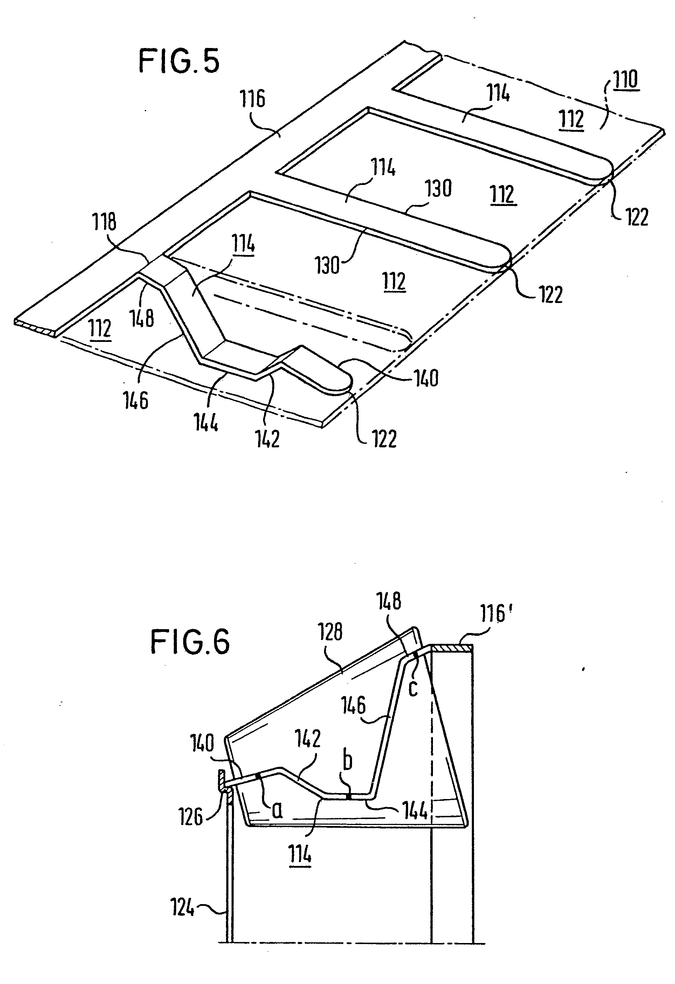

In den Fig. 5 und 6 ist ein anderes Ausführungsbeispiel dargestellt; analoge Teile sind mit gleichen Bezugszeichen versehen, jeweils vermehrt um die Zahl 100.

Zum Unterschied von der zuvor besprochenen Ausführungsform erfährt bei der Ausführungsform nach den Fig. 5 und 6 der Quersteg 114 eine mehrfache Biegung, wie sie an dem linken Quersteg der Fig. 1 und in Fig. 6 dargestellt ist. Durch diese Biegung ergibt sich ein erster Abschnitt 140 des Querstegs angrenzend an den die kleinere Basis bildenden Abschlußring 124, welcher Abschnitt 140 in der durch die Kegelrollenachsen aufgespannten Konusfläche sich befindet. Von diesem Abschnitt 140 ausgehend findet ein Sprung 142 zu einem weiteren Abschnitt 144 statt, welcher radial innerhalb der durch die Kegelrollenachsen aufgespannten Konusfläche parallel zu Mantellinien der Kegelrollen 128 verläuft. An den Abschnitt 144 schließt dann wieder ein Sprung 146 an und an diesen ein weiterer Abschnitt 148, der radial außerhalb der durch die Kegelrollenachsen aufgespannten Konusfläche parallel zu den zugehörigen Mantellinien der Kegelrolle 128 verläuft und in den Ring 116' übergeht.

Man kann bei der Ausführungsform nach Fig. 6 aus der Sicht der Darstellung der Fig. 6 heraus von einer Art Dreipunkt-Lagerung sprechen, wobei die drei Lagerpunkte bei a, b und c zu verstehen sind, gleichgültig, ob nun eine echte Punktanlage oder eine Linienanlage abgegeben ist.

Die Kantenbeschneidung der Querstege 114 kann auch in der Ausführungsform nach den Fig. 5 und 6 so gewählt werden, daß bei Berücksichtigung der Geometrie des Kegelrollenlagers gewünschte Anlageverhältnisse zwischen den Kanten 130 der Querstege 114 und den Kegelrollen 128 gewonnen werden. Der Übersichtlichkeit halber sind die Randbeschneidungen der Kanten 130 in Fig. 5 nicht eingezeichnet.

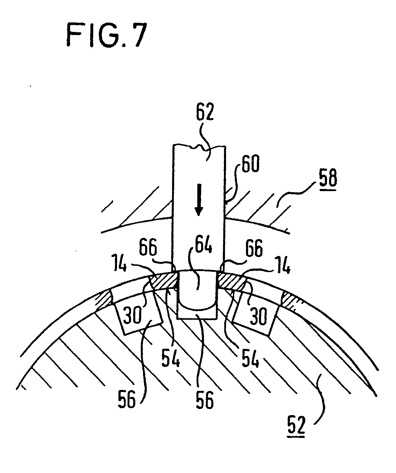

In Fig. 7 ist eine Zentriereinrichtung gezeigt, welche den Käfig vor dem Anschweißen des Abschlußrings 24 in die richtige Lage nachkorrigiert und dabei ggf. auch prägende Nachkorrekturen an den Kanten 30 vornimmt. Die Zentriereinrichtung umfaßt ein zentrales konvexkonisches Zentrierwerkzeug 52 mit Anlageflächen 54 für die Querstege 14; zwischen den Anlageflächen 54 sind Ausnehmungen 56 in dem zentralen Werkzeug 52 vorgesehen. Ein peripheres Werkzeug ist mit 58 bezeichnet. In Führungen 60 dieses peripheren Werkzeugs 58 sind Schieber 62 geführt, welche mit Fingern 64 zwischen den Querstegen 14 hindurchgreifen und in die Ausnehmungen 56 eingreifen, so daß die Querstege 14 durch die Finger 56 in Umfangsrichtung und durch die Schultern 66 in radialer Richtung exakt fixiert werden, bevor die Anschweißung des Abschlußrings 124 erfolgt.

Auch die Justiereinrichtung gemäß Fig. 7 und die Schweißanlage kann im Rahmen der Band- oder Drahtbiege- und -stanzmaschine untergebracht sein.

Zur Fig. 6 ist noch nachzutragen, daß durch die Abschnitte 144 und 148 des Querstegs 114 eine radiale Halterung der Kegelrollen sowohl nach radial innen als auch nach radial außen bewirkt werden kann. Es ist dann in der Regel eine entsprechende Beschneidung der Kanten 130 notwendig, wobei zumindest im Bereich der Abschnitte 146 eine Taillierung der Querstege 114 notwendig ist, während die Abschnitte 144 und 148 entsprechend breiter sein müssen. Bei einer solchen Ausführungsform müssen die Kegelrollen 128 natürlich in die einzelnen Fenster oder Taschen eingefedert werden.

## Patentansprüche

1. Verfahren zur Herstellung eines Käfigs für Kegelrollenlager mit sich zwischen axial beabstandeten Abschlußringen erstreckenden Querstegen durch Ausstanzen von Fenstern aus einem flachen Materialstreifen, Verformen der zwischen den Fenstern stehengebliebenen Querstege und anschließendes Rollen des Materialstreifens zu einem Ring und ggf. Verbinden der Ringenden an der Schlußstelle, dadurch gekennzeichnet, daß man die Fenster (12) in dem Materialstreifen (10) durchgehend bis zu dem einen Rand ausstanzt, derart, daß nur einseitig ein Längssteg (16) mit frei ausladenden Querstegen (14) verbleibt, daß man die Querstege (14) derart verformt, daß die freien Enden der Querstege (14) gegenüber der Ebene des Längsstegs (16) in Radialrichtung des zu bildenden Rings versetzt sind, derart, daß nach dem anschließenden Rollen die freien Enden (22) der Querstege (14) auf einem Kreis mit einem von dem Durchmesser des aus dem Längssteg (16) gebildeten Rings (16') unterschiedlichen Durchmesser liegen und daß man die freien Enden (22) der Querstege (14) mit einem gesondert hergestellten Abschlußring (24) verbindet, insbesondere verschweißt.

2. Verfahren nach Anspruch 1, dadurch gekennzeichnet, daß man den Abschlußring (24) durch Biegen herstellt.

3. Verfahren nach Anspruch 2, dadurch gekennzeichnet, daß man den Abschlußring (24) aus einem flachen Materialstreifen durch Biegen in der Ebene des Materialstreifens herstellt.

4. Verfahren nach einem der Ansprüche 1 bis 3, dadurch gekennzeichnet, daß man an dem Abschlußring (24) und/oder an den Querstegen (14) Anschlagmittel (26) zur Fixierung der freien Enden (22) der Querstege (14) anformt.

5. Verfahren nach Anspruch 4, dadurch gekennzeichnet, daß man als radiale Anschlagmittel (26) für die freien Enden (22) der Querstege (14) eine Kröpfung an dem Abschlußring (24) anformt.

6. Verfahren nach einem der Ansprüche 1 bis 5, dadurch gekennzeichnet, daß man die Querstege (14) lediglich an oder nahe der Verbindungsstelle (18) mit dem Längssteg (16) derart biegt, daß sie von dieser Anschlußstelle bis zum freien Ende (22) geradlinig verlaufen (Fig. 1 und 3).

7. Verfahren nach Anspruch 6, dadurch gekennzeichnet, daß man die Querstege (114) derart biegt, daß sie am fertigen Kegelrollenlager im wesentlichen auf der durch die Kegelrollenachsen definierten Konusfläche liegen.

8. Verfahren nach einem der Ansprüche 1 bis 5, dadurch gekennzeichnet, daß man die Querstege (114) derart biegt, daß sie am fertigen Käfig nicht über ihre ganze Länge in einer einzigen Konusfläche liegen.

9. Verfahren nach Anspruch 8, dadurch gekennzeichnet, daß man die Querstege (114) derart biegt, daß sie im fertigen Konuslager beidseits einer durch die Kegelrollenachsen definierten Konusfläche liegen.

10. Verfahren nach Anspruch 9, dadurch gekennzeichnet, daß man die Querstege (114) derart biegt, daß sie im fertigen Kegelrollenlager, ausgehend von der kleineren Basis (124) des Käfigs, zunächst im wesentlichen in der durch die Kegelrollenachsen definierten Kegelfläche verlaufen (Abschnitt 140), hierauf radial einwärts springen (Abschnitt 142), hierauf im wesentlichen parallel zu einer radial innerhalb der durch die Kegelrollenachsen definierten Konusfläche liegenden Kegelrollenmantellinie verlaufen (Abschnitt 144), hierauf radial nach außen springen (Abschnitt 146) und hierauf parallel zu einer radial außerhalb der durch die Kegelrollenachsen definierten Konusfläche liegenden Kegelrollenmantellinie verlaufen (Abschnitt 148).

11. Verfahren nach einem der Ansprüche 1 bis 10, dadurch gekennzeichnet, daß man die Kanten (30) der Querstege (14), vorzugsweise beim Ausstanzen der Fenster (12), derart beschneidet, daß sie unter Berücksichtigung der Geometrie des fertigen Lagers die Kegelrollen (28) in Umfangsrichtung des Käfigs und ggf. in Radialrichtung des Käfigs in gewünschter Weise führen.

12. Verfahren nach einem der Ansprüche 1 bis 11, dadurch gekennzeichnet, daß man die Kanten (30) der Querstege (14) ggf. unter Ausnutzung der beim Stanzen entstehenden Bruchflächen (32) nach dem Stanzen einer Prägung unterwirft, derart, daß die Kantflächen (32) möglichst tangential an den Kegelrollen anliegen.

13. Verfahren nach einem der Ansprüche 1 bis 12, dadurch gekennzeichnet, daß man beim Stanzen denjenigen Längssteg (16) stehenläßt, welcher am fertigen Käfig die größere Basis (16') bildet.

14. Verfahren nach einem der Ansprüche 1 bis 13, dadurch gekennzeichnet, daß man vor dem Anschweißen des Abschlußrings (24) die Stege (14) des bereits gerollten Materialstreifens (10) zentriert.

15. Verfahren nach Anspruch 14, dadurch gekennzeichnet, daß man die Zentrierung und ggf. Nachverformung mittels einer Vorrichtung durchführt, die aus einem konvexkonischen Innenwerkzeug (52) mit in Flucht zu den Fenstern (12) liegenden Ausnehmungen (56) und aus einem Außenwerkzeug (58) mit in Flucht zu den Fenstern (12) liegenden Schiebern (62) besteht, wobei die Schieber (62) durch die Fenster (12) in die Ausnehmungen (56) einführbar sind.

**Claims**

1. Method for the production of a cage for taper roller bearings with cross bars extending between axially spaced closure rings, by punching out of windows from a flat material strip, deformation of the cross bars remaining between the windows and subsequent rolling of the material strip into a ring and possibly connection of the ring ends at the closure point, characterised in that the windows (12) are punched out of the material strip (10) so as to continue through to one edge in such a way that on only one side a longitudinal bar (16) with freely protruding cross bars (14) remains, in that the cross bars (14) are deformed in such a way that the free ends of the cross bars (14) are offset in relation to the plane of the longitudinal bar (16) in the radial direction of the ring to be formed, in such a way that after the subsequent rolling the free ends (22) of the cross bars (14) lie on a circle having a diameter different from the diameter of the ring (16') formed from the longitudinal bar (16) and in that the free ends (22) of the cross bars (14) are connected with a separately produced closure ring (24), especially by welding.

2. Method according to Claim 1, characterised in that the closure ring (24) is produced by bending.

3. Method according to Claim 2, characterised in that the closure ring (24) is produced from a flat material strip by bending in the plane of the material strip.

4. Method according to one of Claims 1 to 3, characterised in that abutment means (26) for the fixing of the free ends (22) of the cross bars (14) are formed on the closure ring (24) and/or on the cross bars (14).

5. Method according to Claim 4, characterised in that as radial abutment means (26) for the free ends (22) of the cross bars (14) a cranked portion is formed on the closure ring (24).

6. Method according to one of Claims 1 to 5, characterised in that the cross bars (14) are bent only at or near the point of connection (18) with the longitudinal bar (16) in such a way that the extend rectilinearly from this attachment point to the free end (22) (Figures 1 and 3).

7. Method according to Claim 6, characterised in that the cross bars (114) are bent in such a way that on the finished taper roller bearing they lie substantially on the cone surface defined by the axes of the taper rollers.

8. Method according to one of Claims 1 to 5, characterised in that the cross bars (114) are bent in such a way that on the finished cage they do not lie over their whole length in one single cone surface.

9. Method according to Claim 8, characterised in that the cross bars (114) are bent in such a way that in the finished taper bearing they lie on both sides of a cone surface defined by the axes of the taper rollers.

10. Method according to Claim 9, characterised in that the cross bars (114) are bent in such a way that in the finished taper roller bearing, starting from the smaller base (124) of the cage, they firstly extend substantially in the cone surface defined by the taper roller axes (section 140), thereupon spring radially inwards (section 142), then extend substantially parallel with a taper roller surface line lying radially within the cone surface defined by the axes of the taper rollers (section 144), then spring radially outwards (section 146) and thereupon extend parallel to a taper roller surface line lying radially outside the cone surface defined by the taper roller axes (section 148).

11. Method according to one of Claims 1 to 10, characterised in that the edges (30) of the cross bars (14) are clipped in such a way, preferably in the punching out of the windows (12), that taking consideration of the geometry of the finished bearing they guide the taper rollers (28) in the circumferential direction of the cage and possibly in the radial direction of the cage, in the desired manner.

12. Method according to one of Claims 1 to 11, characterised in that the edges (30) of the cross bars (14) are subjected after stamping, possibly utilising the breakage surfaces (32) occurring in stamping, to an impressing action such that the edge faces (32) rest as nearly tangentially as possible on the taper rollers.

13. Method according to one of Claims 1 to 12, characterised in that in the stamping that longitudinal bar (16) is left which in the finished cage forms the larger base (16').

14. Method according to one of Claims 1 to 13, characterised in that the bars (14) of the already rolled material strip (10) are centred before the closure ring (24) is welded thereto.

15. Method according to Claim 14, characterised in that the centring and any subsequent deformation are carried out by means of a device which sonsists of a convexly conical inner tool (52) having apertures (56) lying in alignment with the windows (12) and of an outer tool (58) having plungers (62) lying in alignment with the windows (12), the plungers (62) being capable of being introduced through the windows (12) into the apertures (56).

**Revendications**

1. Procédé de fabrication d'une cage pour roulement à rouleaux coniques, présentant des barreaux transversaux qui s'étendent entre des couronnes de fermeture espacées axialement l'une de l'autre, par découpage de fenêtres dans une bande de matière plate, déformation des barreaux transversaux qui subsistent entre les fenêtres et roulage consécutif de la bande de matière en un anneau, et, éventuellement, réunion des extrémités de l'anneau à l'emplacement du joint, caractérisé en ce que l'on découpe les fenêtres (12) dans la bande de matière (10) de façon ininterrompue jusqu'à l'un des bords, de manière qu'il ne subsiste un voile longitudinal (16) que d'un seul côté, avec des barreaux transversaux (14) s'étendant librement en porte-à-faux, en ce que l'on déforme les barreaux transversaux (14) de manière que les extrémités libres des barreaux transversaux (14) soient déportées par rapport au plan du voile longitudinal (16) dans la direction radiale de l'anneau à former, afin que, après le roulage consécutif, les extrémités libres (22) des barreaux transversaux (14) se trouvent sur un cercle possédant un diamètre différent du diamètre de la couronne (16') formée par le voile longitudinal, et en ce que l'on réunit, notamment que l'on soude, les extrémités libres (22) des barreaux (14) à une couronne de fermeture (24) fabriquée séparément.

2. Procédé selon la revendication 1, caractérisé en ce que l'on fabrique la couronne de fermeture (24) par pliage.

3. Procédé selon la revendication 2, caractérisé en ce que l'on fabrique la couronne de fermeture (24) à partir d'une bande de matière plate, par pliage dans le plan de la bande de matière.

4. Procédé selon l'une quelconque des revendications 1 à 3, caractérisé en ce que l'on forme sur la couronne de fermeture (25) et/ou sur les barreaux transversaux (14) des moyens de butée (26) destinés à fixer les extrémités libres (22) des barreaux transversaux (14).

5. Procédé selon la revendication 4, caractérisé en ce que l'on forme un coude sur la couronne de fermeture (24) en tant que moyens de butée radiaux (26) pour les extrémités libres (22) des barreaux transversaux (14).

6. Procédé selon l'une quelconque des revendications 1 à 5, caractérisé en ce que l'on plie les barreaux transversaux (14) uniquement à leur jonction (18) avec le voile longitudinal (16) ou à proximité de cette jonction, de manière qu'ils s'étendent en ligne droite de cette zone de raccordement jusqu'à l'extrémité libre (22) (Fig. 1 et 3).

7. Procédé selon la revendication 6, caractérisé en ce que l'on plie les barreaux transversaux (114) de manière que, dans le roulement à rouleaux coniques fini, ces barreaux se trouvent sensiblement sur la surface conique définie par les axes des rouleaux coniques.

8. Procédé selon l'une quelconque des revendications 1 à 5, caractérisé en ce que l'on plie les barreaux transversaux (114) de manière que, dans la cage finie, ils ne se trouvent pas sur toute leur longueur dans une seule surface conique.

9. Procédé selon la revendication 8, caractérisé en ce que l'on plie les barreaux (114) de manière que, dans le roulement conique fini, ils se trouvent de part et d'autre d'une surface conique définie par les axes des rouleaux coniques.

10. Procédé selon la revendication 9, caractérisé en ce que l'on plie les barreaux transversaux (114) de manière que, dans le roulement à rouleaux coniques fini, en partant de la petite base (124) de la cage, ils s'étendent tout d'abord sensiblement dans la surface conique définie par les axes des rouleaux coniques (segment 140), puis se dirigent radialement vers l'intérieur (segment 142), puis s'étendent sensiblement parallèlement à une génératrice des rouleaux coniques qui se trouve radialement à l'intérieur de la surface conique définie par les axes des rouleaux coniques (segment 144), puis se dirigent radialement vers l'extérieur (segment 146) et, ensuite, s'étendent parallèlement à une génératrice des rouleaux coniques qui se trouve radialement à l'extérieur de la surface conique définie par les axes des rouleaux coniques (segment 148).

11. Procédé selon l'une quelconque des revendications 1 à 10, caractérisé en ce que l'on découpe les chants (30) des barreaux transversaux (14), de préférence lors du découpage des fenêtres (12), de manière que, compte tenu de la géométrie du roulement fini, ils guident les rouleaux coniques (28) de la façon désirée dans la direction circonférentielle de la cage et, éventuellement, dans la direction radiale de cette cage.

12. Procédé selon l'une quelconque des revendications 1 à 11, caractérisé en ce que, après le découpage, on soumet les chants (30) des barreaux transversaux (14) à un matriçage, en tirant éventuellement parti des surfaces de rupture (32) qui se produisent lors du découpage, de manière que les surfaces (32) des chants s'étendent autant que possible tangentiellement aux rouleaux coniques.

13. Procédé selon l'une quelconque des revendications 1 à 12, caractérisé en ce que, lors du découpage, on laisse subsister le voile longitudinal (16) qui forme la grande base (16') de la cage finie.

14. Procédé selon l'une quelconque des revendications 1 à 13, caractérisé en ce que, avant le soudage de la couronne de fermeture (24), on centre les barreaux (14) de la bande de matière (10) préalablement roulée.

15. Procédé selon la revendication 14, caractérisé en ce que l'on effectue le centrage et éventuellement la déformation ultérieure au moyen d'un dispositif qui est composé d'un outil intérieur (52) de forme conique convexe et présente des évidements (56) situés en coincidence avec les fenêtres (12), et un outil extérieur (58) possédant des coulisseaux (62), les coulisseaux (62) pouvant être introduits dans les évidements (56) à travers les fenêtres (12).

FIG.1

FIG.2

FIG.3

FIG. 4

FIG.5

FIG.6

# FIG.7